(19) Europäisches Patentamt
European Patent Office
Office européen des brevets

(11) **EP 2 449 721 B1**

(12) **FASCICULE DE BREVET EUROPEEN**

(45) Date de publication et mention
de la délivrance du brevet:
**20.11.2019 Bulletin 2019/47**

(21) Numéro de dépôt: **10745354.0**

(22) Date de dépôt: **28.06.2010**

(51) Int Cl.:
*H04L 9/30* $^{(2006.01)}$

(86) Numéro de dépôt international:
**PCT/FR2010/051339**

(87) Numéro de publication internationale:
**WO 2011/001093 (06.01.2011 Gazette 2011/01)**

(54) **CRYPTOGRAPHIE PAR PARAMETRISATION SUR UNE COURBE ELLIPTIQUE**

KRYPTOGRAFIE DURCH PARAMETRIERUNG EINER ELLIPTISCHEN KURVE

CRYPTOGRAPHY BY PARAMETERIZING ON ELLIPTIC CURVE

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **30.06.2009 FR 0954473**

(43) Date de publication de la demande:
**09.05.2012 Bulletin 2012/19**

(73) Titulaire: **Idemia Identity & Security France
92400 Courbevoie (FR)**

(72) Inventeurs:
• **ICART, Thomas
F-75015 Paris (FR)**
• **CHABANNE, Hervé
F-75015 Paris (FR)**

(74) Mandataire: **Plasseraud IP
66, rue de la Chaussée d'Antin
75440 Paris Cedex 09 (FR)**

(56) Documents cités:
• MARKUS ULLMANN ET AL: "Password Authenticated Key Agreement for. Contactless Smart Cards", INTERNET CITATION, 1 janvier 2008 (2008-01-01), XP007913186, Extrait de l'Internet: URL:http://events.iaik.tugraz.at/RFIDSec08 /Papers/Publication/14%20-%20UI Imann%20-%20PW%20Authenticated%20Key%2 0Agr eement%20-%20Paper.pdf [extrait le 2010-05-21]

• THOMAS ICART: "How to Hash into Elliptic Curves", INTERNET CITATION, 24 mai 2009 (2009-05-24), pages 1-14, XP002541652, Extrait de l'Internet:URL:http://eprint.iacr.org/2009/226.pdf [extrait le 2009-08-17]
• BARRETO PAULO S L M ET AL: "Fast hashing onto ellitpic curves over fields of characteristic 3", INTERNET CITATION, 15 novembre 2001 (2001-11-15), pages 1-11, XP002541311, Extrait de l'Internet:URL:http://eprint.iacr.org/2001/098.pdf [extrait le 2009-08-12]
• JULIEN BRINGER AND HERVE CHABANNE AND THOMAS ICART: "Password Based Key Exchange with Hidden Elliptic Curve Public Parameters", INTERNET CITATION, 23 septembre 2009 (2009-09-23), pages 1-26, XP007913138, Extrait de l'Internet: URL:http://eprint.iacr.org/2009/468.pdf [extrait le 2010-05-17]
• "IEEE Standard Specifications for Password-Based Public-Key Cryptographic Techniques;IEEE Std 1363.2-2008", IEEE STANDARD, IEEE, PISCATAWAY, NJ, USA, 29 January 2009 (2009-01-29), pages 1-127, XP017604182, ISBN: 978-0-7381-6016-0

**Description**

La présente invention concerne la cryptographie de messages basée sur l'utilisation de points d'une courbe elliptique, et plus particulièrement cette utilisation dans le domaine des algorithmes de type EKE (pour 'Encrypted Key Exchanged' en anglais).

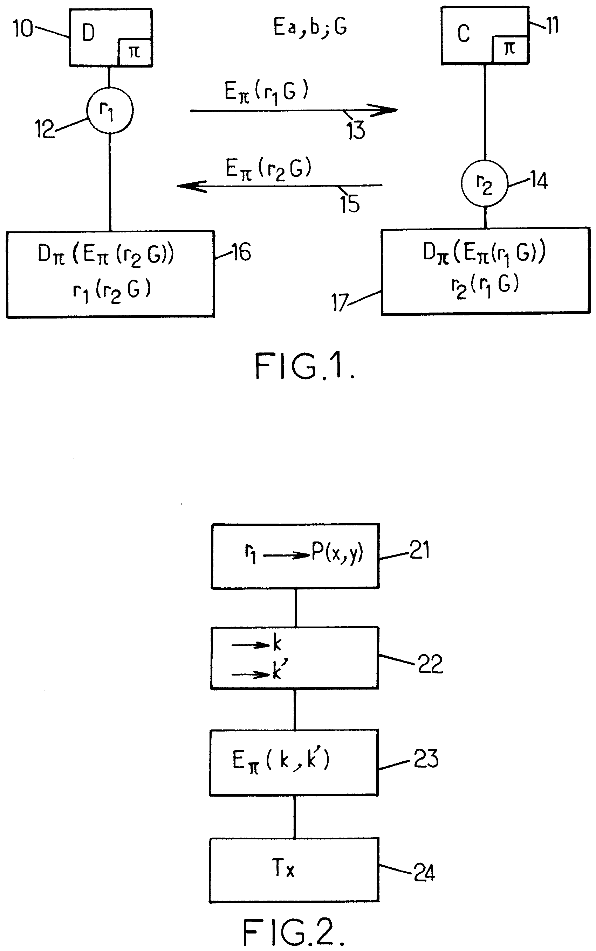

Des méthodes d'authentification par mot de passe sont basées sur l'utilisation d'un algorithme de type EKE. La figure 1 illustre ce type d'algorithme.

Un dispositif D 10 souhaite s'authentifier sur la base d'un mot de passe $\pi$ auprès d'un contrôleur C 11. Chacune de ses entités connait le mot de passe $\pi$. Par ailleurs, on considère une courbe elliptique $E_{a,b}$, et un générateur G de l'ensemble des points de la courbe elliptique, en tant que paramètres publics. La courbe elliptique vérifie l'équation suivante :

$$E_{a,b}(x, y) : x^3 + ax + b = y^2 \qquad (1)$$

A une étape 12, le dispositif D 10 génère un nombre aléatoire $r_1$. Puis, il transmet au contrôleur 11 ce nombre aléatoire sous la forme d'un point de la courbe elliptique. A cet effet, il détermine une valeur V à transmettre vérifiant :

$$V = r_1.G$$

Ce résultat est ensuite chiffré avec le mot de passe sous la forme $E\pi(r_1.G)$, $E_\pi$ étant une fonction de chiffrement par mot de passe.

Puis, le dispositif émet un message 13 à destination du contrôleur indiquant la valeur $E_\pi(r_1.G)$.

Sur réception du message 13, le contrôleur 11 génère à son tour une valeur aléatoire $r_2$ à une étape 14. Puis, il transmet cette valeur sous la forme d'un point de la courbe elliptique, et transmet un message 15 au dispositif 10 indiquant le résultat :

$$E_\pi(r_2.G)$$

Suite à cet échange de valeurs aléatoires $r_1$ et $r_2$ sous forme chiffrée, le dispositif 10 récupère à une étape 16 la valeur aléatoire $r_2$ générée par le contrôleur en déchiffrant, à l'aide d'une fonction de déchiffrement avec mot de passe $D_\pi$, l'information contenue dans le message 15 :

$$r_2.G = D_\pi E_\pi(r_2.G)$$

et le contrôleur 11 récupère à une étape 17 la valeur aléatoire $r_1$ générée par le dispositif 10 en déchiffrant l'information contenue dans le message 13 :

$$r_1.G = D_\pi E_\pi(r_1.G)$$

Ainsi, suite à un échange protégé, chaque entité est en mesure de calculer une clé K commune :

$$K = r_1.r_2.G$$

Ce type d'algorithme vise à échanger des valeurs sous forme chiffrée avec un mot de passe ou une clé dérivée d'un mot de passe. Toutefois, il convient de noter que selon une représentation classique d'une courbe elliptique vérifiant l'équation (1) sur un corps fini $F_q$, les échanges décrits en référence à la figure 1 peuvent permettre à un potentiel attaquant de déduire des informations relativement au mot de passe $\pi$. En effet, le fait d'échanger des valeurs aléatoires sous une forme chiffrée comme décrit ci-avant, via les deux messages 13 et 15, fournit une redondance d'informations qui peut permettre une violation du secret du mot de passe. Plus précisément, à chaque écoute, un attaquant pourrait tester un mot de passe pour déchiffrer les informations échangées dans les messages 13 et 15. Puis, deux cas se présentent à lui. Dans un premier cas, l'information déchiffrée correspond à un point de la courbe et de ce fait le mot de passe est correct. Dans un second cas, l'information déchiffrée ne correspond pas à un point de la courbe elliptique et le mot de passe n'est pas découvert. En multipliant les écoutes et les mots de passe distincts, il est ainsi possible de retrouver le mot de passe qui, lui, appartient à un ensemble fini d'éléments.

Le document 'Password Authenticated Key Agreement for Contactless Smart Cards' de Markus Ullmann, 1er janvier 2008, décrit et compare l'utilisation de protocoles de partage de clés basés sur l'utilisation de mots de passe.

Le document 'How to Hash into Elliptic Curves' de Tomas Icart, 24 mai 2009, décrit une fonction explicite qui, pour une courbe elliptique définie sur un certain ensemble, associe à un élément de cet ensemble un élément de la courbe elliptique en un temps polynomial.

Le document "Fast Hashing onto elliptic curves over fields of characteristic 3" de Paulo Barreto et al., du 15 novembre 2001, décrit un autre procédé permettant de générer un point d'une courbe elliptique à partir d'un paramètre.

Le document « Password Based Key Exchange with Hiddent Elliptic Curve Public Parameters », de J. Bringer et al., du 23 septembre 2009, décrit,un protocole basé sur un mot de passe d'échange de clés de Diffie-Hellman sur une courbe elliptique.

Le document « IEEE Standard Specifications for Password Based Public-Key Cryptographie Techniques, du 29 janvier 2009 », est un catalogue de techniques de cryptographie à clé publique, dont certaines sur courbes elliptiques.

La présente invention vise à améliorer la situation.

Un premier aspect de la présente invention propose un procédé de contrôle d'un dispositif par un contrôleur sur la base d'un mot de passe ;

ledit procédé comprenant les étapes suivantes, au niveau du dispositif ou du contrôleur :

/1/ sur la base d'une valeur aléatoire $r_1$, déterminer un point P(X,Y) d'une courbe elliptique, dans un corps fini $F_q$, q étant un nombre entier, d'équation :

$$E_{a,b}(x, y) : x^3 + ax + b = y^2 \qquad (1)$$

/2/ obtenir des premier et second paramètres k et k', tels que

$$P = F(k,k')$$

où F est une fonction surjective de $F_q$ x $F_q$ dans $F_q$

/3/ obtenir les premier et second paramètres sous forme chiffrée par chiffrement en fonction du mot de passe ; et

/4/ transmettre lesdits premier et second paramètres chiffrés au contrôleur ;

dans lequel la fonction F est telle que, quels que soient z et z' éléments d'entrée de $F_q$, F(z,z') est un point de la courbe elliptique, et les éléments d'entrée ne vérifient pas l'équation (1).

Grâce à ces dispositions, il est possible d'éviter les attaques telles décrites ci-avant au regard de l'art antérieur. En effet, dans ces conditions il n'est plus possible de tester un mot de passe en déterminant si le résultat obtenu correspond à un point (X,Y) de la courbe elliptique $E_{a,b}$ puisque la fonction F fournit toujours un point de la courbe elliptique en sortie quels que soient les paramètres qui ont été fournis en entrée, les paramètres d'entrée ne vérifiant pas l'équation classique d'une courbe elliptique. Astucieusement, on prévoit donc de représenter un point de la courbe elliptique de manière différente, en utilisant cette fonction F surjective, de sorte à ne fournir aucune information à un éventuel attaquant pouvant lui permettre de déduire le mot de passe utilisé.

Afin de déterminer une telle fonction F permettant de représenter un point P(X,Y) d'une courbe elliptique selon une autre paramétrisation que celle de l'équation (1), il est possible de se baser sur une fonction inversible $f_{a,b}$, dont la fonction inverse $f_{a,b}^{-1}$ permet de récupérer un point de la courbe, selon deux paramètres qui ne vérifie pas l'équation (1), à partir d'un paramètre d'entrée.

La fonction F peut s'écrire :

$$F(k, k') = f'(k') + f_{a,b}(k)$$

où $f_{a,b}$ est une fonction inversible, basée sur les coefficients a et b de la courbe elliptique, prenant un paramètre d'entrée et fournissant un point de la courbe elliptique et

où f' est une fonction générant un point de la courbe elliptique en fonction d'un paramètre ;

et

où, à l'étape /2/, on obtient les paramètres k et k' selon les étapes suivantes :

- générer de manière aléatoire une valeur du paramètre k' ;
- calculer une valeur de f'(k') ;
- déterminer une valeur du paramètre k selon l'équation suivante :

$$k = f_{a,b}^{-1}(P(X,Y) - f'(k'))$$

Avantageusement, en combinant une fonction f' qui permet de générer un point de la courbe elliptique sur la base d'un paramètre k' de valeur aléatoire et une fonction $f_{a,b}$ inversible et basée sur les coefficients de la courbe elliptique a et b, alors on peut obtenir une fonction F qui permet de paramétriser un point de la courbe tout en évitant les attaques décrites.

La fonction f' peut notamment s'écrire :

$$f'(k') = k'.G$$

avec G générateur de l'ensemble des points de la courbe elliptique ; et une valeur du paramètre k est déterminée selon l'équation suivante :

$$k = f_{a,b}^{-1}(P(X,Y) - k'.G)$$

Dans ces conditions, on peut écrire la fonction F come suit :

$$F(k,k') = f_{a,b}(k) + k'.G$$

Alternativement, la fonction f' peut s'écrire :

$$f'(k') = f_{a,b}(k')$$

et

une valeur du paramètre k est déterminée selon l'équation suivante :

$$k = f_{a,b}^{-1}(P(X,Y) - f_{a,b}(k'))$$

Dans ces conditions, on peut écrire la fonction F comme suit :

$$F(k,k') = f_{a,b}(k) + f_{a,b}(k')$$

Ainsi, de manière générale, pour paramétriser un point P(X,Y) de la courbe selon la présente invention, en une première étape on prévoit d'obtenir un point de la courbe pour une valeur du paramètre k'. Puis, on détermine un point de la courbe qui correspond à la soustraction du point P(X, Y) à représenter et du point obtenu à la première étape. On obtient alors un autre point de la courbe elliptique. Ensuite, sur ce point on applique la fonction inverse de $f_{a,b}$ et on obtient une valeur du paramètre k. Le point P est alors représenté sous la forme du couple de paramètres k et k' qui ne vérifie pas l'équation (1).

Dans un mode de réalisation de la présente invention, la fonction F comprend au moins une fonction inversible $f_{a,b}$, telle que

$$\forall P = (X,Y) \in E_{a,b}, \left| f_{a,b}^{-1}(X,Y) \right| < L$$

avec L un nombre entier ayant une valeur relativement petite par rapport au nombre de points de la courbe elliptique (1).

On entend par le fait que la fonction F comprenne une fonction $f_{a,b}$, le fait que l'application de la fonction F à des premier et second paramètres correspond à appliquer cette fonction $f_{a,b}$ à au moins un parmi les premier et second paramètres. On peut ainsi prévoir, d'une part, de générer un point de la courbe sur la base du premier paramètre et, d'autre part, d'appliquer la fonction inverse de $f_{a,b}$ pour obtenir le second paramètre. En procédant ainsi on peut représenter un point de la courbe elliptique selon ces deux paramètres.

Ainsi, l'application de la fonction F à des premier et second paramètres peut correspondre à l'application à au moins un des deux paramètres d'une fonction $f_{a,b}$ telle que

$$\forall P(X,Y) \in E_{a,b}, \left| f_{a,b}^{-1}(X,Y) \right| < L \qquad (4)$$

avec L un nombre entier ayant une valeur relativement petite par rapport au nombre de points de la courbe elliptique (1).

Autrement dit, la fonction $f_{a,b}$ considérée ici a une préimage correspondant à un ensemble de points P de la courbe elliptique $E_{a,b}$ borné par une valeur maximale sensiblement petite au regard du nombre de points de la courbe elliptique. En effet, si tel n'est pas le cas, il est alors possible d'inverser la fonction $f_{a,b}$ simplement en tirant un nombre de manière aléatoire. Dans ce contexte, on peut par exemple considérer que L est plus petit que $1/2^{80}$ fois le nombre de points de la courbe.

En utilisant une fonction inversible vérifiant les conditions (4), on peut obtenir aisément une fonction F qui permet de représenter un point sur la courbe via des paramètres k et k' qui ne permettent pas une attaque du mot de passe utilisé pour les chiffrer, telle que celle décrite ci-avant.

Dans un mode de réalisation de la présente invention, la fonction $f_{a,b}$ fait correspondre à un paramètre u, un couple de paramètres (x, y) tel que x est l'unique solution de l'équation suivante :

$$x^3 + ax + b - (ux + Q(u,a,b))^2 = 0 \qquad (5)$$

et y vérifie :

$$y = u.x + Q(u,a,b)$$

Cette équation (5) est obtenue en remplaçant y dans l'équation (1) par le terme ux+Q(u,a,b). Le terme Q(u,a,b) désigne une fraction rationnelle en les variables u, a et b.

Le fait que cette équation (5) n'admette qu'une seule racine équivaut au fait que le discriminant noté $\Delta(u,a,b)$ *du* terme suivant n'est pas un carré quel que soit le paramètre u :

$$x^3 + ax + b - (ux + Q(u,a,b))^2$$

Pour q= 2 mod 3, on peut écrire :

$$\Delta(u,a,b) = -3R(u,a,b)^2$$

où R est une fraction rationnelle.

En effet, pour p=2mod3, -3 n'est pas un carré et donc $-3R(u,a,b)^2$ n'est jamais un terme au carré.

Puisque l'équation (5) n'admet qu'une seule racine alors le terme suivant est un polynôme de degré 1 :

$$\gcd(x^3 + ax + b - (ux + Q(u,a,b))^2, X^P - X)$$

où gcd est un grand dénominateur commun.

La racine de ce polynôme, notée $X_P$, est une abscisse d'un point sur la courbe elliptique. Finalement, le point d'abscisse $X_P$ et d'ordonnée $u.X_P+Q(u,a,b)$ est un point sur la courbe.

Dans un exemple, on peut prendre en considération une fraction rationnelle Q(u,a,b) qui vérifie l'équation suivante :

$$Q(u,a,b) = \frac{236196u^2ab + 405u^8a - 20412u^6b - 45927u^4a^2 - u^{12} + 19683a^3}{54u(-162au^4 + 2187a^2 - u^8 + 2916bu^2)}$$

Dans un mode de réalisation, la fonction $f_{a,b}$ peut avantageusement être définie comme suit dans $F_q$, q étant égal à 2 mod 3,. Elle fait correspondre à un paramètre u, un couple de paramètres (x, y) tel que :

$$x = (v^2 - b - u^6/27)^{1/3} + u^2/3$$

et

$$y = u.x + v$$

avec $v = \dfrac{3a - u^4}{6u} = Q(u,a,b)$  et avec $f_{a,b}(0)=0$.

Une telle fonction est inversible. En effet, soit un P(X,Y) de la courbe elliptique, une préimage du point par la fonction $f_{a,b}$ est une solution de l'équation suivante :

$$u^4 - 6u^2x + 6uy - 3a = 0$$

Or, une telle équation polynomiale est facile à inverser.

En outre, l'ensemble de points P préimage de cette fonction $f_{a,b}$ est borné par L petit devant le nombre de points de la courbe elliptique.

Ainsi, cette fonction vérifie les caractéristiques définies ci-avant.

On peut également prévoir de baser la fonction F sur l'utilisation d'une fonction $f_{a,b}$ définie à partir de polynômes vérifiant l'équation de Skalba.

Il convient de noter que des polynômes vérifiant l'égalité de Skalba sont définis dans le document 'Rational points on certain hyperlliptic curves over finite fields' de Maciej Ulas, publié le 11 juin 2007. Ces fonctions sont inversibles. En effet, étant donné des polynômes $X_1(k)$, $X_2(k)$, $X_3(k)$ et $U(k)$ vérifiant l'égalité de Skalba, c'est à dire vérifiant :

$$f(X_1(k)).f(X_2(k)).f(X_3(k))=U(k)^2$$

où f est le polynôme qui définit la courbe elliptique $E_{a,b}$.

Plus précisément, f vérifie l'équation :

$$f(x)=y^2$$

où x et y sont des éléments de $F_q^2$, et le couple (x,y) représente un point de $E_{a,b}$.

On définit $f_{a,b}(k)$ comme étant le point $P=(X_i(k), f(X_i(k))^{1/2})$, où i est tel que $f(X_i(k))$ est un carré dans $F_q$. Ainsi pour inverser cette fonction $f_{a,b}$, étant donné un point P=(X,Y), on calcule les solutions $k_s$ des trois équations polynomiales :

$$X_1(k_s)\text{-}X = 0$$

$$X_2(k_s)\text{-}X = 0$$

$$X_3(k_s)\text{-}X = 0$$

Chacune de ces solutions est une préimage de P par $f_{a,b}$.

Dans le cas où F(k,k') s'écrit :

$$F(k,k') = f_{a,b}(k) + f_{a,b}(k')$$

On peut avantageusement obtenir une répartition uniforme des points, valeurs de sortie de $f_{a,b}$, pour une répartition uniforme des valeurs d'entrée. Dans ce cas, si les valeurs d'entrée sont aléatoirement déterminées, alors les valeurs de sortie présentent également une répartition aléatoire.

En procédant ainsi, on peut éviter des attaques basées sur une étude statistique des valeurs du paramètre utilisées qui pourraient fournir des informations. En effet, dans le cas où l'inverse de cette fonction $f_{a,b}$ sur un point P de la courbe elliptique correspond à une pluralité de valeurs du paramètre d'entrée de cette fonction inverse, il est possible que certaines de ces valeurs reviennent plus souvent que d'autres selon une loi statistique. Ainsi, si l'attaquant connait cette loi statistique, en testant un mot de passe sur les informations échangées, il peut décider si les valeurs du paramètre échangées suivent cette loi ou non. Il peut ainsi en déduire si le mot de passe testé est correct ou non.

Afin d'éviter ce type d'attaque, il peut être avantageux de mettre en œuvre un algorithme tel que celui décrit ci-après.

On pose $D_i$ l'ensemble des points de la courbe elliptique $E_{a,b}$ qui a exactement un nombre i de préimages par la fonction $f_{a,b}$. Dans l'exemple décrit ci-après, on définit cinq ensembles : $D_1$, $D_2$, $D_3$, $D_4$ et $D_5$.

On note GEN une fonction qui génère de manière aléatoire et uniformément répartie des points de la courbe elliptique. Soit $\delta_i = \dfrac{i}{L}$ , une probabilité associée à l'ensemble $D_i$.

Pour t=0 à T-1, où T est un nombre entier

- générer un point $P_t$ avec la fonction GEN ;
- si $P_t$ est un élément de D0, alors aller au début ;
- Si Pt est un élément de Di

  ○ Sélectionner de manière aléatoire une valeur b comprise entre 0 et 1 et vérifiant :

$$\Pr(b=0) = \delta_i$$

  ○ Si b est égal à 1, alors aller à l'étape (1) ;
  ○ Sinon

    - sélectionner de manière aléatoire un élément u dans l'ensemble $f_{a,b}^{-1}(P_t)$

    - retourner u

Il convient de noter que, pour obtenir une probabilité 1-1 /2$^k$ de succès, il est suffisant d'avoir T égal à un polynôme évalué en k de degré 1, autrement dit T un multiple de k.

On peut en outre mettre en œuvre les étapes suivantes :

- recevoir un message indiquant des premier et second paramètres sous forme chiffrée avec le mot de passe;
- déchiffrer les premier et second paramètres et obtenir des paramètres p et p' ; et
- calculer une valeur secrète commune K avec le contrôleur selon l'équation suivante :

$$K = r_1 . F(p,p')$$

où $r_1$ est la valeur aléatoire utilisée à l'étape /1/.

Ainsi, le dispositif et le contrôleur peuvent in fine disposer d'une clé commune sans avoir échanger des informations qui mettent en péril le secret du mot de passe.

Un deuxième aspect de la présente invention propose une entité électronique comprenant des moyens adaptés pour la mise en œuvre d'un procédé de contrôle selon le premier aspect de la présente invention.

Un troisième aspect de la présente invention propose un système de contrôle par mot de passe comprenant au une première entité électronique selon le deuxième aspect en tant que contrôleur et une seconde entité électronique selon le deuxième aspect en tant que dispositif à contrôler.

D'autres aspects, buts et avantages de l'invention apparaîtront à la lecture de la description d'un de ses modes de réalisation.

L'invention sera également mieux comprise à l'aide des figures suivantes :

- la figure 1, déjà décrite, illustre les principales étapes d'un procédé de contrôle selon l'art antérieur ;
- la figure 2 illustre les principales étapes d'un procédé de contrôle selon un mode de réalisation de la présente invention ;
- la figure 3 illustre une mise en œuvre d'un procédé de contrôle entre un dispositif et un contrôleur selon un mode de réalisation de la présente invention ; et
- la figure 4 illustre un dispositif et un contrôleur selon un mode de réalisation de la présente invention.

La figure 2 illustre les principales étapes d'un procédé de contrôle selon un mode de réalisation de la présente invention.

A une étape 21, on déterminer un point $P=(X,Y)$ d'une courbe elliptique dans un corps fini $F_q$, q nombre entier, sur la base d'une valeur aléatoire $r_1$. Puis, à une étape 22, on obtient des premier et second paramètres k et k', tels que

$$P=F(k,k')$$

où F est une fonction surjective telle que de $F_q \times F_q$ dans $F_q$

Les paramètres ainsi obtenus permettent de représenter le point P de manière astucieuse de sorte à protéger le secret du mot de passe au cours des échanges entre le dispositif et le contrôleur.

A une étape 23, on obtient les premier et second paramètres sous forme chiffrée par chiffrement en fonction du mot de passe $\pi\, E_\pi(k,k')$.

Sous cette forme astucieuse, la valeur aléatoire $r_1$ peut avantageusement être transmise, à une étape 24, depuis le dispositif à contrôler au contrôleur, respectivement depuis le contrôleur au dispositif à contrôler de sorte à générer une clé commune secrète.

La fonction F est telle que, quels que soient z et z' élément de $F_q$, $F(z,z')$ est un point de la courbe elliptique et les éléments z et z' ne vérifient pas l'équation (1).

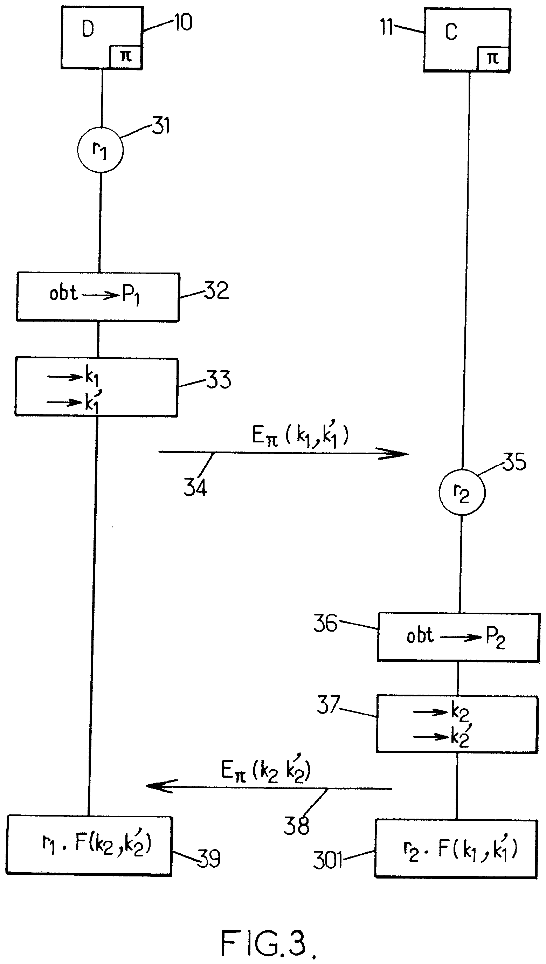

La figure 3 illustre un échange de messages entre un dispositif à contrôler 10 et un contrôleur 11 selon un mode de réalisation de la présente invention.

Le dispositif à contrôler D 10 génère en premier lieu à une étape 31 une valeur aléatoire $r_1$. Lorsque l'ordre de l'ensemble des points de la courbe elliptique est un nombre entier N, alors $r_1$ peut être pris au hasard par l'ensemble des valeurs : [0, N-1].

Puis, à partir de cette valeur aléatoire, on génère un point $P=(X,Y)$ de la courbe elliptique $E_{a,b}$ en utilisant un générateur G. Un tel générateur est tel que, pour tout point P de la courbe elliptique, il existe une valeur h telle que :

$$P=h.G$$

Ainsi, on obtient un point $P_1$ tel que :

$$P_1=r_1.G$$

Ensuite, on détermine des valeurs des paramètres $k_1$ et $k_1'$, à une étape 33, pour représenter le point $P_1$ selon des paramètres différents de ses coordonnées X et Y qui, eux, vérifient l'équation (2).

Afin de déterminer ces paramètres $k_1$ et $k_1'$, on peut en premier lieu générer une valeur aléatoire pour le paramètre $k_1'$. Puis, à cette valeur aléatoire $k_1'$ correspond un point de la courbe elliptique $P_{k1}$, soit en appliquant une fonction $f_{a,b}$ qui fait correspondre à un paramètre des coordonnées x, y d'un point de la courbe, soit en utilisant un générateur G des points de la courbe elliptique.

Puis, on obtient une valeur du paramètre $k_1$, en appliquant l'application inverse de $f_{a,b}$ au point correspondant à une soustraction dans le groupe de points de la courbe elliptique : $P(X,Y)-P_{k1}$.

Les paramètres $k_1$ et $k_1'$ représentent le point $P(X,Y)$. Ensuite, on chiffre par une fonction de chiffrement $E_\pi$ basée mot de passe $\pi$, les premier et second paramètres obtenus ci-avant pour les transmettre au contrôleur via un message 34.

De manière symétrique, le contrôleur génère une valeur aléatoire $r_2$ à une étape 35. Puis, il transforme cette valeur en un point $P_2$ de la courbe elliptique, à une étape 36. Ensuite, comme décrit à l'étape 33 précédemment, le contrôleur obtient des valeurs respectives des premier et second paramètres $k_2$ et $k_2'$, à une étape 37. Puis, il chiffre ces valeurs avant de les transmettre au dispositif à contrôler 10, via un message 38.

Le dispositif à contrôler 10 dispose donc de la valeur aléatoire $r_1$, des valeurs $k_2$ et $k_2'$ et de la fonction F.

Ainsi, à une étape 39, il récupère le point $P_2$ :

$$P_2=F(k_2,k'_2)$$

Il obtient donc une clé secrète K partagée avec le contrôleur sans pour autant avoir fourni une quelconque information sur le mot de passe, qui vérifie :

$$K=r_1.r_2.G$$

Le contrôleur récupère d'une manière symétrique la clé secrète K à une étape 301.

La fonction F telle que définie ci-avant peut s'écrire sous différente forme. Les sections suivantes décrivent différentes représentations de ce point P qui permettent avantageusement de ne pas fournir de redondance d'informations lors des échanges chiffrés des valeurs aléatoires.

La fonction F est surjective de $F_q$ x Fq dans $F_q$, telle que :

$$P=F(k,k') \qquad\qquad (3)$$

et telle que, pour tout couple de valeur (k,k'), P est un point de la courbe elliptique, sans que l'équation (1) ne soit vérifiée par k et k'.

Dans un tel contexte, avantageusement, aucune information ne peut être déduite sur le mot de passe, sur la base d'échanges des valeurs aléatoires échangées, contrairement à l'art antérieur. En effet, le couple de valeurs (k,k') est alors échangé de manière chiffrée entre le dispositif et le contrôleur. Mais, quel que soit le mot de passe essayé par un éventuel attaquant pour récupérer ce couple de valeur, il est impossible de déterminer si ce mot de passe est correct ou non, puisque tout résultat obtenu correspond à un point sur la courbe elliptique, sans que l'équation (1) ne soit vérifiée par k et k'.

Une telle représentation peut être basée sur des caractéristiques avantageuses d'une fonction $f_{a,b}(U)$ qui présente la caractéristique suivante :

$$\forall P \in E_{a,b}, \left| f_{a,b}^{-1}(P) \right| < L$$

avec L un nombre entier.

Autrement, dit, la taille de l'ensemble de préimage de cette fonction est bornée par un nombre L petit devant le nombre de points de courbe elliptique.

En considérant la fonction $f_{a,b}(u)$ suivante, on peut avantageusement déterminer une fonction F selon un mode de réalisation de la présente invention, qui fait correspondre à un paramètre u dans $F_q$, un couple de paramètres (x, u.x+v) dans $F_q^2$ tel que :

$$x = (v^2 - b - u^6/27)^{1/3} + u^2/3$$

et

$$v = \frac{3a - u^4}{6u}$$

en posant $f_{a,b}(0)=0$.

La fonction F peut alors s'écrire :

$$F(k,k')=f_{a,b}(k)+f_{a,b}(k')$$

ou encore

$$F(k,k')=f_{a,b}(k)+k'.G$$

On peut également considérer que $f_{a,b}$ est une fonction issue de polynômes vérifiant l'égalité de Skalba:

$$f(X_1(k)).f(X_2(k)).f(X_3(k))=U(k)^2$$

dans laquelle $X_1(k)$, $X_2(k)$, $X_3(k)$ et $U(k)$ sont des polynômes vérifiant l'égalité de Skalba tel que cela est défini, par exemple, dans le document 'Rational points on certain hyperlliptic curves over finite fields' de Maciej Ulas, publié le 11 juin 2007. $f_{a,b}(k)$ est ici défini comme $(X_i(k),f(X_i(k))^{1/2})$ où i est tel que $f(X_i(k))$ est un carré dans $F_q$.

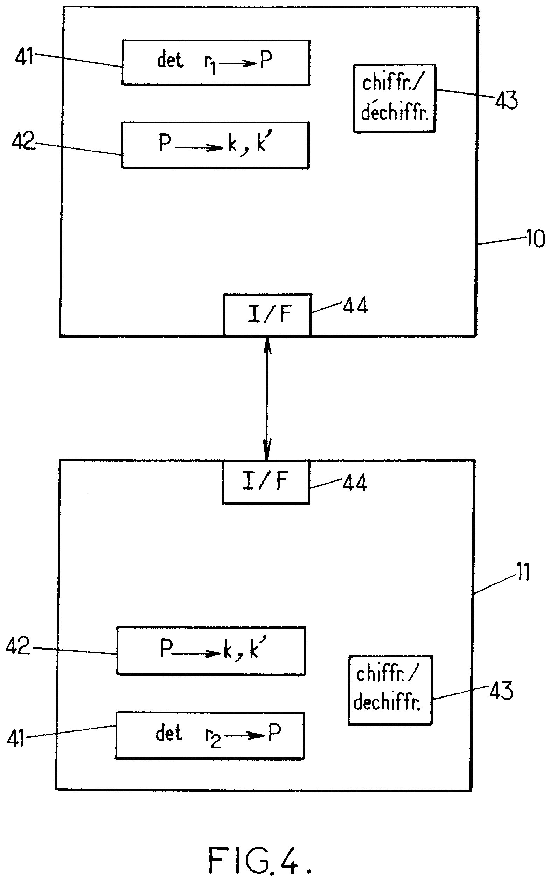

La figure 4 illustre un système de contrôle comprenant un dispositif à contrôler et un contrôleur selon un mode de réalisation de la présente invention.

Un tel système de contrôle comprend au moins une entité électronique en tant que dispositif à contrôler 10, et une entité de contrôle ou contrôleur 11 selon un mode de réalisation de la présente invention. Une telle entité électronique, qu'elle soit utilisée en tant que dispositif à contrôler ou en tant contrôleur, peut comprendre :

- une unité de détermination 41 adaptée pour déterminer un point P(X,Y) d'une courbe elliptique dans un corps fini $F_q$, q étant un nombre entier, sur la base d'une valeur aléatoire $r_1$, la courbe elliptique vérifiant l'équation ;

$$E_{a,b}(x,y) : x^3 + ax + b = y^2 \qquad (1)$$

- une unité d'obtention 42 adaptée pour obtenir des premier et second paramètres k et k', tels que

$$P=F(k,k')$$

où F est une fonction surjective de $F_q \times F_q$ dans $F_q$,
- une unité de chiffrement 43 adaptée pour obtenir les premier et second paramètres sous forme chiffrée par chiffrement en fonction du mot de passe ; et
- une unité d'interface 44 adaptée pour transmettre lesdits premier et second paramètres chiffrés au contrôleur ;

la fonction F étant telle que, quels que soient z et z' éléments d'entrée de $F_q$, F(z,z') est un point de la courbe elliptique et les éléments d'entrée ne vérifient pas l'équation (1).

La fonction de chiffrement par mot de passe $E_\pi$ peut être définie de différente manière. Elle prend en paramètre d'entrée une chaîne de bits et retourne en sortie une chaine de bits. Néanmoins, il est nécessaire, pour garantir la confidentialité du mot de passe, que la valeur retournée ne donne pas d'information sur le mot de passe. Ainsi, on peut distinguer deux cas :

- soit le mot de passe est utilisé comme clef de chiffrement d'une fonction de chiffrement classique,
- soit le mot de passe est un index qui, dans une base de données, indique la valeur des paramètres publics de la courbe elliptique. Dans les deux cas, l'algorithme de chiffrement peut se dérouler comme suit, afin de transformer une valeur d'un paramètres k ou k' en une chaîne de bits, on peut appliquer la méthode suivante :
On sélectionne une valeur aléatoire r. Puis, on transforme une valeur v de paramètre en une chaîne de bits en calculant :

$$v' = v+r.q'$$

avec q' correspondant soit à q soit à N, q étant le nombre d'éléments du corps de base $F_q$, N étant le nombre de points de la courbe elliptique. On peut ensuite représenter v' par une chaine de bits.

Dans le cas où le mot de passe $\pi$ est un index, v' est la valeur chiffrée de v sous le mot de passe, car seule la personne connaissant les paramètres publics (q ou N) peut retrouver la valeur de v.

Dans le cas où le mot de passe est utilisé comme clef de chiffrement d'une fonction de chiffrement classique, il suffit de chiffrer v' en utilisant la fonction de chiffrement $E_\pi$.

Ainsi côté réception, dans le premier cas, on peut récupérer v en calculant v' mod q'. Dans le second cas, il faut déchiffrer la chaine de bits envoyée par la fonction de déchiffrement, afin de retrouver v' et enfin pouvoir calculer v en calculant v' mod N.

La présente invention peut avantageusement être mise en œuvre dans tout type de calcul cryptographique utilisant des courbes elliptiques. Elle peut notamment être avantageuse au sein de protocoles d'authentification par mot de passe, comme PACE (pour 'Password Authenticated Connection Establishment' en anglais). Dans ce cas, elle permet une amélioration des performances de calculs, tout en ne permettant aucune attaque liée au temps d'exécution du calcul cryptographique.

La présente invention peut également être avantageusement appliquée dans le contexte des protocoles respectant la vie privée, tels que ceux qui sont utilisés pour le contrôle de documents d'identité électronique, comme les passeports électroniques. En effet, l'écoute du protocole présenté ne permet pas de retrouver les paramètres publics de la courbe elliptique utilisée contrairement à l'art antérieur.

## Revendications

1. Procédé de contrôle sur base d'un mot de passe ($\pi$) effectué soit par une première entité électronique soit par une seconde entité électronique; ladite première entité électronique étant dénommée contrôleur (11) ladite seconde entité entité électronique en tant dénommée dispositif à contrôler (10); ledit procédé comprenant les étapes suivantes:

    /1/ sur la base d'une valeur aléatoire $r_1$, déterminer un point P(X,Y) d'une courbe elliptique, dans un corps fini $F_q$, q étant un nombre entier, d'équation :

$$E_{a,b}(x, y) : x^3 + ax + b = y^2 \qquad (1)$$

    /2/ obtenir des premier et second paramètres k et k', tels que

$$P(X,Y)=F(k,k')$$

    où F est une fonction surjective de $F_q \times F_q$ dans $F_q$,
    /3/ obtenir les premier et second paramètres sous forme chiffrée par chiffrement en fonction du mot de passe ; et
    /4/ transmettre lesdits premier et second paramètres chiffrés

    dans lequel la fonction F est telle que, quels que soient z et z' éléments d'entrée de $F_q$, F(z,z') est un point de la courbe elliptique, et les éléments d'entrée ne vérifient pas l'équation (1) la transmission desdits premier et second paramètres chiffrés s'effectuant donc sans qu'aucune information ne puisse être déduite sur le mot de passe.

2. Procédé de contrôle selon la revendication 1, dans lequel la fonction F s'écrit :

$$F(k, k')= f'(k')+f_{a,b}(k)$$

    où $f_{a,b}$ est une fonction inversible, basée sur les coefficients a et b de la courbe elliptique, prenant un paramètre d'entrée et fournissant un point de la courbe elliptique et
    où f' est une fonction générant un point de la courbe elliptique en fonction d'un paramètre ;

    et
    dans lequel, à l'étape /2/, on obtient les paramètres k et k' selon les étapes suivantes :

- générer de manière aléatoire une valeur du paramètre k' ;
- calculer une valeur de f'(k') ;
- déterminer une valeur du paramètre k selon l'équation suivante :

$$k = f_{a,b}^{-1}(P(X,Y) - f'(k'))$$

3. Procédé de contrôle selon la revendication 2, dans lequel la fonction f' s'écrit :

$$f'(k') = k'.G$$

avec G générateur de l'ensemble des points de la courbe elliptique ; et dans lequel une valeur du paramètre k est déterminée selon l'équation suivante :

$$k = f_{a,b}^{-1}(P(X,Y) - k'.G)$$

4. Procédé de contrôle selon la revendication 2, dans lequel la fonction f' s'écrit :

$$f'(k') = f_{a,b}(k')$$

et
dans lequel une valeur du paramètre k est déterminée selon l'équation suivante :

$$k = f_{a,b}^{-1}(P(X,Y) - f_{a,b}(k'))$$

5. Procédé de contrôle selon l'une quelconque des revendications précédentes, dans lequel la fonction F comprend au moins une fonction inversible $f_{a,b}$, obtenue à l'aide de polynômes $X_1(k)$, $X_2(k)$, $X_3(k)$ et $U(k)$ vérifiant l'équation de Skalba :

$$f(X_1(k)).f(X_2(k)).f(X_3(k)) = U(k)^2$$

où f est le polynôme qui définit la courbe elliptique $E_{a,b}$.

6. Procédé de contrôle selon la revendication 5, dans lequel la fonction $f_{a,b}$ fait correspondre à un paramètre u dans $F_q$, un couple de paramètres (x,y) dans $(F_q)^2$, où q est égal à 2 mod 3, tel que :

$$x = (v^2 - b - u^6/27)^{1/3} + u^2/3$$

et

$$y = u.x + v$$

avec $v = \dfrac{3a - u^4}{6u}$ et $f_{a,b}(0) = 0$.

7. Procédé de contrôle selon l'une quelconque des revendications précédentes, comprenant en outre les étapes suivantes :

- recevoir un message indiquant des premier et second paramètres sous forme chiffrée avec le mot de passe;

- déchiffrer les premier et second paramètres et obtenir des paramètres p et p'; et
- calculer une valeur secrète commune K avec le contrôleur selon l'équation suivante :

$$K = r_1.F(p, p')$$

où $r_1$ est la valeur aléatoire utilisée à l'étape /1/.

**8.** Entité électronique pour un système de contrôle par mot de passe comprenant :

- une unité de détermination (41) adaptée pour déterminer un point P(X,Y) d'une courbe elliptique dans un corps fini $F_q$, q étant un nombre entier, sur la base d'une valeur aléatoire $r_1$, la courbe elliptique étant d'équation :

$$E_{a,b}(x, y) : x^3 + ax + b = y^2 \qquad (1)$$

- une unité d'obtention (42) adaptée pour obtenir des premier et second paramètres k et k', tels que

$$P=F(k,k')$$

où F est une fonction surjective de $F_q \times F_q$ dans $F_q$,
- une unité de chiffrement (43) adaptée pour obtenir les premier et second paramètres sous forme chiffrée par chiffrement en fonction du mot de passe ; et
- une unité d'interface (44) adaptée pour transmettre lesdits premier et second paramètres chiffrés ;

la fonction F étant telle que, quels que soient z et z' éléments d'entrée de F(z,z') est un point de la courbe elliptique, et les éléments d'entrée ne vérifient pas l'équation (1) la transmission desdits premier et second paramètres chiffrés s'effectuant donc sans qu'aucune information ne puisse être déduite sur le mot de passe.

**9.** Entité électronique selon la revendication 8, comprenant des moyens adaptés pour mettre en œuvre un procédé de contrôle selon l'une quelconque des revendications 1 à 7.

**10.** Système de contrôle par mot de passe comprenant au moins une première entité électronique selon la revendication 8 ou 9 en tant que contrôleur et une seconde entité électronique selon la revendication 8 ou 9 en tant que dispositif à contrôler.

**Patentansprüche**

**1.** Steuerverfahren auf der Grundlage eines Passworts ($\pi$), das entweder von einer ersten elektronischen Einheit oder von einer zweiten elektronischen Einheit ausgeführt wird; wobei die erste elektronische Einheit als Steuerung (11) bezeichnet wird, wobei die zweite elektronische Einheit als zu steuernde Vorrichtung (10) bezeichnet wird; wobei das Verfahren die folgenden Schritte umfasst:

/1/ auf der Grundlage eines Zufallswertes $r_1$, Bestimmen eines Punkts P(X,Y) einer elliptischen Kurve in einem endlichen Körper $F_q$, wobei q eine ganze Zahl ist, nach der folgenden Gleichung:

$$E_{ab}(x, y) : x^3 + ax + b = y^2 \quad (1)$$

/2/ Erhalten der ersten und zweiten Parameter k und k', als

$$P(X, Y) = F(k, k'),$$

wobei F eine surjektive Funktion von $F_q \times F_q$ in $F_q$ ist,

/3/ Erhalten der ersten und zweiten Parameter in verschlüsselter Form durch passwortabhängige Verschlüsselung; und

/4/ Übertragen der ersten und zweiten verschlüsselten Parameter;

wobei die Funktion F so ist, dass, unabhängig von den Eingabeelementen z und z' von $F_q$, $F(z,z')$ ein Punkt auf der elliptischen Kurve ist, und die Eingabeelemente die Gleichung (1) nicht erfüllen, so dass die Übertragung der ersten und zweiten verschlüsselten Parameter stattfindet, ohne dass irgendeine Information aus dem Passwort ableitbar ist.

2. Steuerverfahren nach Anspruch 1, wobei die Funktion F folgendermaßen geschrieben wird:

$$F(k, k') = f'(k') + f_{a,b}(k)$$

wobei $f_{a,b}$ eine invertierbare Funktion ist, die auf den Koeffizienten a und b der elliptischen Kurve basiert, unter Verwendung eines Eingabeparameters und Bereitstellung eines Punktes der elliptischen Kurve und wobei f' eine Funktion ist, die einen Punkt der elliptischen Kurve als Funktion eines Parameters erzeugt; und

wobei in Schritt /2/ die Parameter k und k' gemäß den folgenden Schritten erhalten werden:

- zufälliges Erzeugen eines Wertes des Parameters k' ;
- Berechnen eines Wertes von f'(k');
- Bestimmen eines Wertes des Parameters k nach der folgenden Gleichung:

$$k = f_{a,b}^{-1}(P(X,Y) - f'(k'))$$

3. Steuerverfahren nach Anspruch 2, wobei die Funktion f folgendermaßen geschrieben wird:

$$f'(k') = k'.G$$

wobei G alle Punkte der elliptischen Kurve erzeugt; und wobei ein Wert des Parameters k gemäß der folgenden Gleichung bestimmt wird:

$$k = f_{a,b}^{-1}(P(X,Y) - k'.G)$$

4. Steuerverfahren nach Anspruch 2, wobei die Funktion f' folgendermaßen geschrieben wird:

$$f'(k') = f_{a,b}(k')$$

und

wobei ein Wert des Parameters k nach der folgenden Gleichung bestimmt wird:

$$k = f_{a,b}^{-1}(P(X,Y) - f_{a,b}(k'))$$

5. Steuerverfahren nach einem der vorhergehenden Ansprüche, wobei die Funktion F mindestens eine invertierbare Funktion $f_{a,b}$ umfasst, die unter Verwendung der Polynome $X_1(k)$, $X_2(k)$, $X_3(k)$ und $U(k)$ erhalten wird und die Skalba-Gleichung erfüllt:

$$F(X_1(k)).f(X_2(k)).f(X_3(k)) = U(k)^2$$

wobei f das Polynom ist, das die elliptische Kurve $E_{a,b}$ definiert.

6. Steuerverfahren nach Anspruch 5, wobei die Funktion $f_{a,b}$ einem Parameter u in $F_q$, einem Paar von Parametern (x,y) in $(F_q)^2$ entspricht, wobei q gleich 2 mod 3 ist, so dass:

$$x = (v^2 - b - u^6 / 27)^{1/3} + u^2/3$$

und y = *u.x+v*

mit $V = \dfrac{3a - u^4}{6u}$

und $f_{a,b}(0)=0$ ist.

7. Steuerverfahren nach einem der vorhergehenden Ansprüche, ferner umfassend die folgenden Schritte:

- Empfangen einer Nachricht, die die ersten und zweiten Parameter in mit dem Passwort verschlüsselter Form anzeigt;
- Entschlüsseln der ersten und zweiten Parameter und Erhalten der Parameter p und p'; und
- Berechnen eines gemeinsamen Geheimwertes K mit der Steuerung gemäß der folgenden Gleichung:

$$K = r_1.F(p,p')$$

wobei $r_1$ der in Schritt /1/ verwendete Zufallswert ist.

8. Elektronische Einheit für ein Passwortsteuerungssystem, umfassend:

- eine Bestimmungseinheit (41), die geeignet ist, um einen Punkt P(X,Y) einer elliptischen Kurve in einem endlichen Körper $F_q$ zu bestimmen, wobei q eine ganze Zahl ist, basierend auf einem Zufallswert $r_1$, und die elliptische Kurve der folgenden Gleichung entspricht:

$$E_{a,b}(x,y) : x^3 + ax + b = y^2 \quad (1)$$

- eine Erhaltungseinheit (42), die geeignet ist, um erste und zweite Parameter k und k' zu erhalten, wie

$$P=F(k,k')$$

wobei F eine surjektive Funktion von $F_q x \mid F_q$ in $F_q$ ist,
- eine Verschlüsselungseinheit (43), die geeignet ist, um die ersten und zweiten Parameter in verschlüsselter Form durch passwortabhängige Verschlüsselung zu erhalten; und
- eine Schnittstelleneinheit (44), die geeignet ist, um die ersten und zweiten verschlüsselten Parameter zu übertragen;

wobei die Funktion F so ist, dass, unabhängig von den Eingabeelementen z und z' von $F_q$, F(z,z') ein Punkt auf der elliptischen Kurve ist, und die Eingabeelemente die Gleichung (1) nicht erfüllen, so dass die Übertragung der ersten und zweiten verschlüsselten Parameter stattfindet, ohne dass irgendeine Information aus dem Passwort ableitbar ist.

9. Elektronische Einheit nach Anspruch 8, umfassend Mittel, die geeignet sind, um ein Steuerverfahren nach einem der Ansprüche 1 bis 7 durchzuführen.

10. Steuerverfahren auf der Grundlage eines Passworts, umfassend mindestens eine erste elektronische Einheit nach Anspruch 8 oder 9 als Steuerung und eine zweite elektronische Einheit nach Anspruch 8 oder 9 als eine zu steuernde Vorrichtung.

**Claims**

1. Password ($\pi$)-based control method implemented either by a first electronic entity or by a second electronic entity; said first electronic entity being referred to as a controller (11), said second electronic entity being referred to as a device to be controlled (10); said method comprising the following steps of:

   /1/ on the basis of a random value $r_1$, determining a point P(X,Y) of an elliptic curve, in a finite field $F_q$, q being an integer, of equation:

   $$E_{a,b}(x, y) : x^3 + ax + b = y^2 \qquad (1)$$

   /2/ obtaining first and second parameters k and k', such that

   $$P(X,Y)=F(k,k')$$

   where F is a surjective function of $F_q \times F_q$ in $F_q$,
   /3/ obtaining the first and second parameters in encrypted form by encryption as a function of the password; and
   /4/ transmitting said encrypted first and second parameters;

   wherein the function F is such that, regardless of z and z' input elements of $F_q$, F(z,z') is a point on the elliptic curve, and the input elements do not satisfy the equation (1), the transmission of said encrypted first and second parameters thus taking place without the possibility of deducing any information about the password.

2. Control method according to claim 1, wherein the function F is written:

   $$F(k, k') = f'(k') + f_{a,b}(k)$$

   where $f_{a,b}$ is an invertible function, based on the coefficients a and b of the elliptic curve, taking an input parameter and supplying a point on the elliptic curve and where f is a function generating a point on the elliptic curve as a function of a parameter;
   and
   wherein, in step /2/, the parameters k and k' are obtained according to the following steps of:

   - randomly generating a value of the parameter k';
   - calculating a value of f'(k');
   - determining a value of the parameter k according to the following equation:

   $$k = f_{a,b}^{-1}(P(X,Y) - f'(k'))$$

3. Control method according to claim 2, wherein the function f is written:

   $$f'(k') = k'.G$$

   where G is the generator of the set of points on the elliptic curve; and wherein a value of the parameter k is determined according to the following equation:

   $$k = f_{a,b}^{-1}(P(X,Y) - k'.G)$$

4. Control method according to claim 2, wherein the function f is written:

$$f'(k')= f_{a,b}(k')$$

and
wherein a value of the parameter k is determined according to the following equation:

$$k = f_{a,b}^{-1}(P(X,Y) - f_{a,b}(k'))$$

5. Control method according to any of the preceding claims, wherein the function F comprises at least one invertible function $f_{a,b}$, obtained by means of polynomials $X_1(k)$, $X_2(k)$, $X_3(k)$ and $U(k)$ satisfying Skalba's equation:

$$f(X_1(k)).f(X_2(k)).f(X_3(k))=U(k)^2$$

where f is the polynomial that defines the elliptic curve $E_{a,b}$.

6. Control method according to claim 5, wherein the function $f_{a,b}$ makes a pair of parameters (x, y) in $(F_q)^2$ correspond to a parameter u in $F_q$, where q is equal to 2 mod 3, such that:

$$x = (v^2 - b - u^6 / 27)^{1/3} + u^2/3$$

and

$$y = u.x + v$$

where

$$v = \frac{3a - u^4}{6u}$$

and

$$f_{a,b}(0)=0.$$

7. Control method according to any of the preceding claims, further comprising the following steps of:

- receiving a message indicating the first and second parameters in password-encrypted form;
- decrypting the first and second parameters and obtaining parameters p and p'; and
- calculating a common secret value K with the controller according to the following equation:

$$K = r_1.F(p, p')$$

where $r_1$ is the random value used in step /1/.

8. Electronic entity for a password control system comprising:

- a determination unit (41) adapted to determine, on the basis of a random value $r_1$, a point P(X,Y) on an elliptic curve in a finite field $F_q$, q being an integer, the elliptic curve being of equation:

$$E_{a,b}(x, y): x^3 + ax + b = y^2 \qquad (1)$$

- an obtaining unit (42) adapted to obtain first and second parameters k and k', such that

$$P=F(k,k')$$

where F is a surjective function of $F_q \times F_q$ in $F_q$,
- an encryption unit (43) adapted to obtain the first and second parameters in encrypted form by encryption as a function of the password; and
- an interface unit (44) adapted to transmit said encrypted first and second parameters; the function F being such that, regardless of z and z' input elements of $F_q$, F(z,z') is a point on the elliptic curve, and the input elements do not satisfy the equation (1), the transmission of said encrypted first and second parameters thus taking place without the possibility of deducing any information about the password.

9. Electronic entity according to claim 8, comprising means adapted to implement a control method according to any of claims 1 to 7.

10. Password control system comprising at least one first electronic entity according to claim 8 or 9 as a controller, and one second electronic entity according to claim 8 or 9 as a device to be controlled.

FIG.1.

FIG.2.

FIG.3.

FIG.4.

**RÉFÉRENCES CITÉES DANS LA DESCRIPTION**

**Littérature non-brevet citée dans la description**

- **MARKUS ULLMANN.** *Password Authenticated Key Agreement for Contactless Smart Cards,* 01 Janvier 2008
- **TOMAS ICART.** *How to Hash into Elliptic Curves,* 24 Mai 2009
- **PAULO BARRETO et al.** *Fast Hashing onto elliptic curves over fields of characteristic 3,* 15 Novembre 2001
- **J. BRINGER et al.** *Password Based Key Exchange with Hiddent Elliptic Curve Public Parameters,* 23 Septembre 2009
- *IEEE Standard Specifications for Password Based Public-Key Cryptographie Techniques,* 29 Janvier 2009
- **MACIEJ ULAS.** *Rational points on certain hyperlliptic curves over finite fields,* 11 Juin 2007